# EUROPEAN PATENT SPECIFICATION

(11) **EP 1 325 687 B1**
(45) Date of publication and mention of the grant of the patent: **25.01.2006**
(21) Application number: 02026907.2
(22) Date of filing: 03.12.2002
(51) Int. Cl.: A41D 27/08

(54) **Method for producing a metallic label and product thereby obtained**
Methode zum Herstellen eines metallischen Etiketts und ein dadurch erhaltenes Produkt
Procédé pour produire des étiquettes métalliques et produit ainsi obtenu

(30) Priority: 21.12.2001 IT TV20010170
(43) Date of publication of application: 09.07.2003
(73) Proprietor: Kros S.r.l., 31030 Albaredo Di Vedelago (Prov. of Treviso) (IT)
(72) Inventor: De Bortoli, Clodi, 31033 Castelfranco Veneto (Prov.of Trev) (IT); Busetti, Gabriele, 31040 Nervesa Della Battaglia (IT)
(74) Representative: Modiano, Micaela Nadia

(56) References cited:
- EP-A- 0 373 624
- WO-A-91/00584
- DE-A- 3 148 451
- JP-A- 1 005 900
- US-A- 3 257 747
- US-A- 4 619 048
- US-A- 6 017 653
- US-A- 6 132 834
- US-B1- 6 455 128
- DATABASE WPI Derwent Publications Ltd., London, GB; AN 1973-57963U XP002239856 : "Bonding metallic plate members to plastic sheets - eg for making lapel badges" & JP 48 030475 B, 20 March 1993 (1993-03-20)

## Description

The present invention relates to a method for producing a metallic label and to the product thereby obtained.

Currently, in fields such as clothing and sports equipment it is known to associate fabric and/or plastic labels with the products.

These labels are suitable to characterize the product by indicating for example the trademark of the manufacturer, the logo of the product, or another identifying name.

Usually, such known types of label have regions, such as a perimetric edge, for connecting the label to the fabric or to the associated item of leatherwear by sewing. DE-A-3148451 discloses a multi component label comprising a label support made of leather or textile material or similar and which can be sewn onto a garment.
The label support element is interposed between two rigid elements, a backing plate and a decorative plate. The three elements are joined together by means of removable engagement, and in particular the decorative plate is joined by means of a snap-on engagement to the backing plate.

As an alternative, it is known to glue the labels to the fabric or to provide them by means of one or more threads sewn directly onto the surface of the item of clothing or of the chosen article.

The main drawback of these known kinds of connection means is that they only allow to apply labels made of a certain kind of material, such as labels made for example of plastics or fabric.

In particular, it is not possible to sew metallic labels or for example to achieve effective gluing of a metallic label to a fabric or to an item of leatherwear.

This is due mainly to the fact that the supporting fabrics are much more deformable than a metal lamina or plate, accordingly causing, over time, the partial or total separation of the metallic label and the fabric.

The inability to use metallic labels has the drawback of imposing limitations on the production of labels that produce the intended impact on potential customers.

An example of a method for bonding metal clasps to plastics lapel badges, identity tags and similar which allows to connect a metallic plate to a plastic layer, is disclosed by JP(B)48030475, Derwent WPI; AN: 1973-57963U.
The Japanese document discloses a method for producing a metallic plate on which, on the opposite sides of its upper surface, several indentations are provided. The plate is further provided with a plurality of central holes. Once the plate with holes and indentation as above described is obtained, the method disclosed provides the step of placing the plate on a low melting plastic sheet and subsequently of heating and pressing the metallic plate into the plastic sheet by means of a heat plate.
The plate is pressed until a portion of the molten plastic flows into the central holes and between the indentations of the metallic plate to produce paddings of the molten plastic. Then, the heat plate is removed and the paddings are cooled.
The method disclosed allows to form paddings which bound the metallic plate creating a multi-layer coating of plastics completely surrounding the metallic plate.

The aim of the present invention is to solve the mentioned technical problems, eliminating the drawbacks of the cited known art, by providing a method that allows a stable and durable connection between a metallic label and a fabric or an item of leatherwear.

Within this aim, an object of the invention is to devise a method that allows to provide this connection rapidly and cheaply.

Another object is to provide a method that allows to connect a metallic label to a fabric or to an item of leatherwear by using known and very simple machines.

Another object is to provide a method that produces a product that is structurally simple and has low manufacturing costs.

This aim and these and other objects that will become better a parent hereinafter are achieved by a method for producing a metallic label according to claim 1.

This method is suitable to obtain a label, according to claim 6.

Further characteristics and advantages of the invention will become better apparent from the detailed description of a particular embodiment thereof, illustrated only by way of non-limitative example in the accompanying drawings, wherein:
Figure 1 is a front view of the metal plate after microperforation;

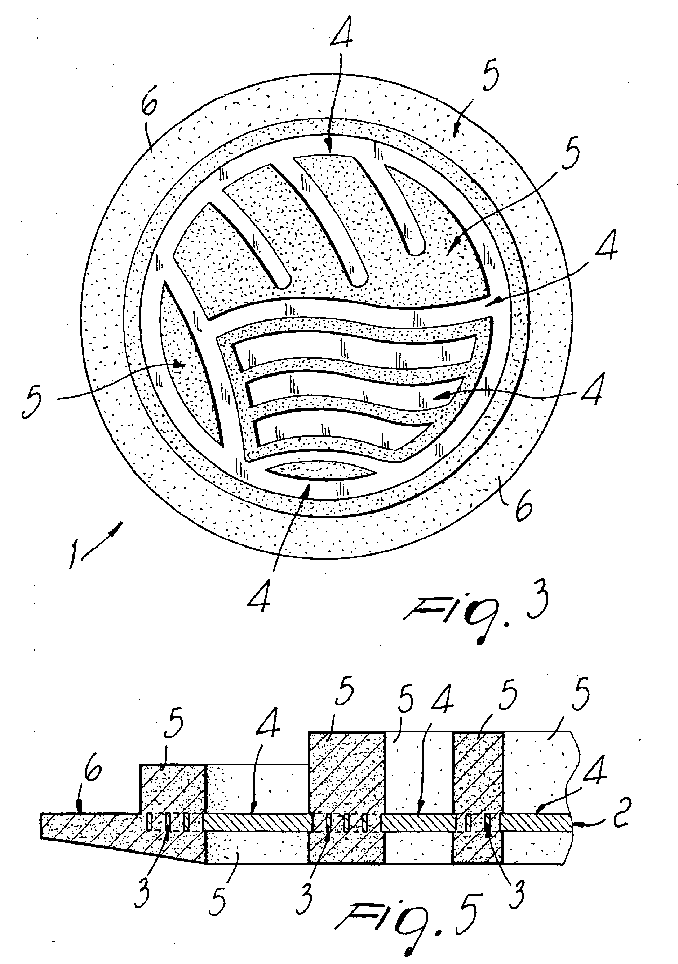

Figures 2 and 3 are front views of the microperforated plate partially and fully affected by the plastic material;

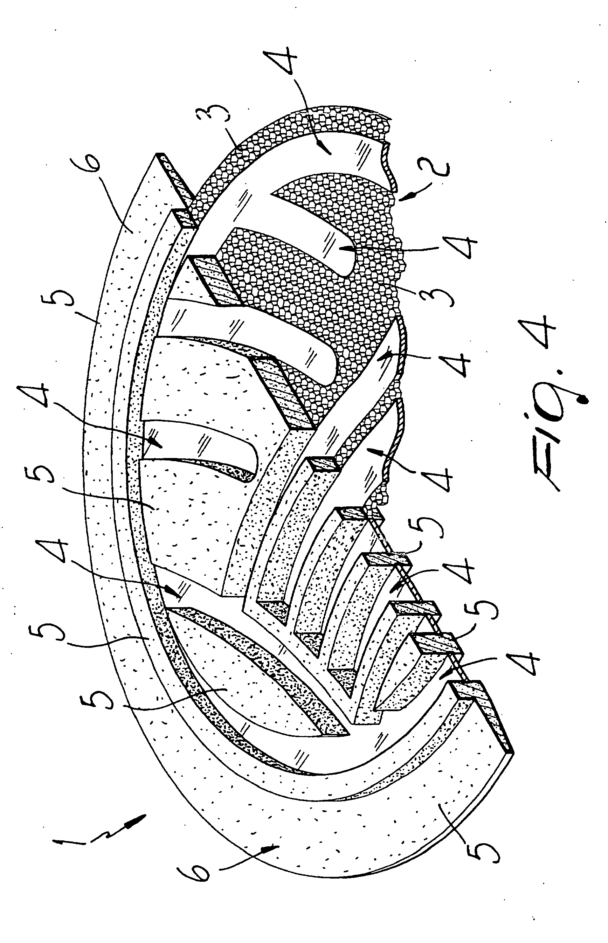

Figure 4 is a partially sectional perspective view of the label;
Figure 5 is a sectional side view of a detail of the label.

A method for producing a metallic label, designated by the reference numeral 1, particularly suitable to be associated for example with a fabric or an item of leatherwear, is described with reference to the above cited figures.

The method comprises a first step, in which a plate 2 having a chosen shape is obtained from a metallic lamina; the metallic lamina advantageously must have a low thickness, so that it can undergo elastic deformation as a consequence of an equal deformation of the fabric or item of leatherwear with which it will be associated.

One or more microperforated regions, generally designated by the reference numeral 3, are provided on said plate 2; said regions are provided so that the untreated surface constitutes the shape of the design and/or lettering that composes said label 1.

The microperforation of the plate 2 can be obtained advantageously for example by means of a chemical photoengraving process.

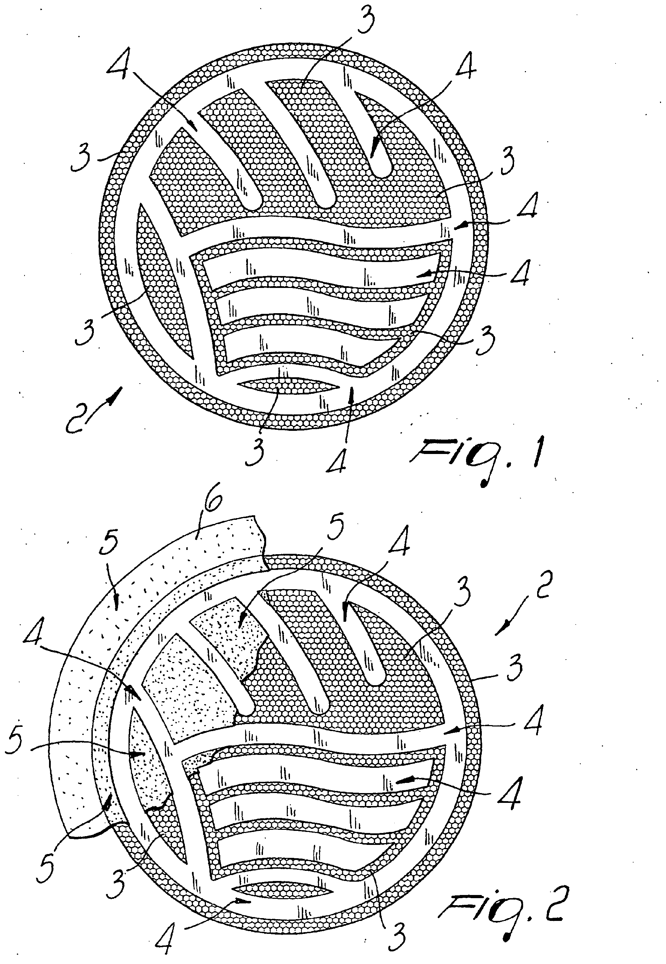

The partially microperforated plate 2 thus obtained, shown in Figure 1, is then encloses in an appropriate mold for the injection of thermoplastic material.

The mold, not shown, allows to inject thermoplastic material, designated by the reference numeral 5, only in the microperforated regions 3, thus protecting from the injection the non-perforated and flat regions, designated by the reference numeral 4, that constitute the design and/or lettering.

In this manner, once the label 1 thus obtained is extracted from the mold, the thermoplastic material 5 is slightly in relief with respect to the plane of arrangement of the plate 2.

The shape of the mold is such as to produce, during the injection process, at least one outer perimetric edge 6, whose thickness and width are such as to allow to sew the label 1 to an underlying fabric or item of leatherwear.

However, it is also possible, in the case of a label provided with at least one internal hole or opening, to obtain at least one separate internal perimetric edge at which a second stitched seam is provided.

This method therefore allows to obtain a label 1 that is constituted by a metal plate 2, made for example of steel or aluminum, that has a preset shape and is associated and partially embedded in a layer of plastic 5 that has means for connection to said fabric or item of leatherwear.

The connection means are constituted by perimetric edges 6, at which it is possible to provide for example a stitched seam.

Use is therefore as follows. Once the label has been sewn to the fabric or item of leatherwear, the elastic deformability of the metal plate allows it to follow the movements and deformations imparted to the support with which it is associated, at the same time avoiding the disconnection of the plate from the plastic material that constitutes the edges.

This is due essentially to the fact that the described process has produced an intimate interconnection between the two components, i.e., the metal plate and the injected plastic material, which is achieved mainly by way of the presence of the microperforations provided in the regions that surround the design and/or lettering that constitutes the label.

It has thus been found that the invention has achieved the intended aim and objects, a method having been provided that allows to obtain labels that comprise a metal plate and can be firmly and stably associated with a fabric or an item of leatherwear.

The method further allows to provide a rapid and durable connection by using known and inexpensive machines that are very easy to use and therefore without requiring highly specialized labor.

The invention is of course susceptible of numerous modifications and variations all of which are within the scope of the same inventive concept as defined in the appended claims.

It is possible to provide a method, which does not fall within the scope of this application, in which the step for microperforating the metallic plate is replaced with a separate step that is in any case suitable io obtain openings of any shape that are suitable to act as a mold for the injection of plastics and therefore as a region for intimate connection between said plastic material and the metallic plate.

With the step of microperforating microapertures of any shape may be obtained, which are suitable to act as a mold for the injection of plastics and therefore as a region for intimate connection between said plastic material and the metallic plate. Holes as mentioned above and such microapertures may be obtained.

The materials used, as well as the dimensions that constitute the individual components of the invention, may of course be more pertinent according to requirements.

The various means for performing certain different functions certainly need not coexist only in the illustrated embodiment but might be per se present in many embodiments, including embodiments that have not been illustrated.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for producing a metallic label (1), suitable to be connected to a fabric or item of leatherwear, comprising, the steps of:
-- producing a metal plate (2) having an intended shape;
-- providing, on said plate (2), one or more microperforated regions (3), so as to obtain a blank;
-- closing said blank in a mold and subsequently;
-- injecting thermoplastic material (5) in said one or more microperforated regions (3), so as to obtain a label that has one or more perimetric edges (6) that protrude beyond the perimeter of said plate (2), said one or more perimetric edges (6) constitute means for connection to said fabric or item of leatherwear.

2. The method according to claim 1, wherein the step of partially microperforating said plate (2) is obtained by way of a chemical photoengraving process.

3. The method according to any of the preceding claims, wherein said one or more microperforated regions (3) surround one or more designs and/or letterings (4) that compose the trademark and/or logo to be highlighted by means of said label.

4. The method according to any of the preceding claims, wherein said mold allows the injection of thermoplastic material (5) only at said one or more microperforated regions (3), thus protecting from injection the remaining regions (4) that are not microperforated and flat and constitute one or more designs and/or letterings that compose the trademark and/or logo to be highlighted by means of said label (1).

5. The method according to any of the preceding claims, wherein said perimetric edges (6) have a thickness and a width that allow to sew said label (1) onto said underlying fabric or item of leatherwear.

6. A label (1), suitable to be connected to a fabric or to an item of leatherwear, comprising a metallic plate (2) having one or more microperforated regions (3) affected by a layer of plastics (5), said metallic plate (2) is thereby associated and partially embedded in said layer of plastics (5), which protrudes beyond the perimeter of said plate (2) by one or more perimetric tabs or edges (6), which constitute means for connection to said fabric or item of leatherwear.

7. The label (1) according to claims 6, wherein said thermoplastic material (5) that forms said layer is slightly in relief with respect to the plane of arrangement of said plate (2).

## Revendications

1. Procédé pour produire une étiquette métallique (1), appropriée pour être raccordée à un tissu ou à une pièce en cuir, comprenant les étapes consistant à :
produire une plaque métallique (2) ayant une forme souhaitée ;
prévoir sur ladite plaque (2) une ou plusieurs zones microperforées (3) de manière à obtenir une ébauche ;
enfermer ladite ébauche dans un moule, et par la suite,
injecter un matériau thermoplastique (5) dans ladite ou lesdites zones microperforées (3) de manière à obtenir une étiquette qui comporte un ou plusieurs bords périmétriques (6) qui dépassent au-delà du périmètre de ladite plaque (2), ledit ou lesdits bords périmétriques (6) constituant des moyens de raccordement audit tissu ou à ladite pièce en cuir.

2. Procédé selon la revendication 1, dans lequel l'étape consistant à microperforer partiellement ladite plaque (2) est obtenue par un processus de photogravure chimique.

3. Procédé selon l'une quelconque des revendications précédentes, dans lequel ladite ou lesdites zones microperforées (3) entourent un ou plusieurs dessins et/ou lettrages (4) qui composent la marque et/ou le logo à faire ressortir au moyen de ladite étiquette.

4. Procédé selon l'une quelconque des revendications précédentes, dans lequel ledit moule permet l'injection d'un matériau thermoplastique (5) uniquement sur ladite ou lesdites zones microperforées (3), protégeant ainsi contre l'injection les zones (4) restantes qui ne sont pas microperforées, et plates et constituent un ou plusieurs dessins et/ou lettrages qui composent la marque et/ou le logo à faire ressortir au moyen de ladite étiquette (1).

5. Procédé selon l'une quelconque des revendications précédentes, dans lequel lesdits bords périmétriques (6) ont une épaisseur et une largeur qui permettent de coudre ladite étiquette (1) sur ledit tissu ou ladite pièce en cuir sous-jacente.

6. Étiquette (1), appropriée pour être raccordée à un tissu ou à une pièce en cuir, comprenant une plaque métallique (2) qui comporte une ou plusieurs zones microperforées (3) affectées par une couche de plastique (5), ladite plaque métallique (2) est ainsi associée et partiellement noyée dans ladite couche en matière plastique (5), qui dépasse au-delà du périmètre de ladite plaque (2), par une ou plusieurs pattes ou bords périmétriques (6) qui constituent des moyens de raccordement audit tissu ou à ladite pièce en cuir.

7. Étiquette (1) selon la revendication 6, dans laquelle ledit matériau thermoplastique (5) qui forme ladite couche est légèrement en relief par rapport au plan d'agencement de ladite plaque (2).

## Patentansprüche

1. Verfahren zum Herstellen eines metallischen Etiketts (1), das an einem Stoff oder einem Stück aus Lederware angebracht werden kann, aufweisend die Schritte von:
-- Herstellen einer metallischen Platte (2) mit einer gewünschten Form;
-- zur Verfügung stellen eines oder mehrerer mikroperforierter Bereiche (3) auf besagter Platte (2), um so einen Rohling zu erhalten;
-- Einschließen besagten Rohlings in einer Form; und anschließendes
-- Einspritzen eines thermoplastischen Materials (5) in besagten einen oder mehrere mikroperforierte Bereiche (3), um so ein Etikett zu erhalten, das eine oder mehrere umgebende Kanten (6) hat, die über den Umfang der besagten Platte (2) überstehen, wobei besagte eine oder mehrere umgebende Kanten (6) Mittel bilden für die Verbindung an besagtem Stoff oder Stück aus Lederware.

2. Verfahren nach Anspruch 1, wobei der Schritt des teilweisen Mikroperforierens besagter Platte (2) mittels eines chemischen Fotogravur-Prozesses erreicht wird.

3. Verfahren nach einem der vorhergehenden Ansprüche, wobei besagter einer oder mehrere mikroperforierte Bereiche (3) ein oder mehrere Designs und/oder Beschriftungen (4) umgeben, welche die Marke und/oder das Logo bilden, das mittels besagten Etiketts hervorgehoben werden soll.

4. Verfahren nach einem der vorhergehenden Ansprüche, wobei besagte Form das Einspritzen des thermischen Materials (5) nur an besagem einen oder mehreren mikroperforierten Bereichen (3) ermöglicht, so dass die übrigen Bereiche (4), die nicht mikroperforiert und flach sind, und ein oder mehrere Designs und/oder Beschriftungen bilden, welche die durch besagtes Etikett (1) hervorzuhebende Marke und/oder das Logo bilden, vor dem Einspritzen geschützt werden.

5. Verfahren nach einem der vorhergehenden Ansprüche, wobei besagte umgebende Kanten (6) eine Dicke und eine Breite haben, die es ermöglichen, besagtes Etikett (1) an besagtem untergelegten Stoff oder Stück aus Lederware anzunähen.

6. Etikett (1), das dazu geeignet ist, an einem Stoff oder einem Stück aus Lederware angebracht zu werden, aufweisend eine metallische Platte (2) mit einem oder mehreren mikroperforierten Bereichen (3) beeinflusst durch eine Schicht von Kunststoff (5), wodurch besagte metallische Platte (2) in Verbindung steht und teilweise eingebettet ist in besagte Schicht von Kunststoff (5), die über den Umfang besagter Platte (2) mit einer oder mehreren Umfangslappen oder -kanten (6) vorsteht, welche Mittel für die Verbindung besagten Stoffes oder Stücks aus Lederware bilden.

7. Etikett (1) nach Anspruch 6, wobei besagtes thermoplastisches Material (5), das besagte Schicht bildet, leicht in einer Kontur bezüglich der Anordnungsebene besagter Platte (2) ist.
